# EUROPÄISCHE PATENTSCHRIFT

(11) **EP 2 886 235 B1**
(45) Veröffentlichungstag und Bekanntmachung des Hinweises auf die Patenterteilung: **24.07.2019**
(21) Anmeldenummer: 14001320.2
(22) Anmeldetag: 10.04.2014
(51) Int. Cl.: B23K 9/167, B23K 9/23, B23K 10/02, B23K 35/38

(54) **Verfahren zum Wolfram-Inertgasschweißen oder zum Plasmaschweißen**
Method for tungsten inert gas welding or for plasma arc welding
Procédé de soudage au tungstène sous gaz inerte ou au plasma

(30) Priorität: 17.12.2013 DE 102013021480
(43) Veröffentlichungstag der Anmeldung: 24.06.2015
(73) Patentinhaber: Linde Aktiengesellschaft, 80331 München (DE)
(72) Erfinder: Ammann, Thomas, 6010 Kriens (CH)
(74) Vertreter: Gellner, Bernd

(56) Entgegenhaltungen:
- DD-A1- 133 538
- US-A- 6 111 219
- US-A1- 2002 008 094
- US-A1- 2013 008 876

## Beschreibung

Die Erfindung betrifft ein Verfahren zum Wolfram-Inertgasschweißen oder zum Plasmaschweißen sowie ein Gasgemisch als Schutzgas für das Wolfram-Inertgasschweißen oder als Außengas für das Plasmaschweißen, insbesondere zum Schweißen von nichtrostenden Stählen und/oder Duplex-Stählen.

### Stand der Technik

US 2002/008094 A1 offenbart ein Schweißverfahren und ein Gasgemisch gemäß dem Oberbegriff der Ansprüche 1 und 6.

Beim Wolfram-Inertgasschweißen (WIG-Schweißen) von nicht rostenden Stählen aller Art (insbesondere bei Duplex-Stählen) können (schwarze bzw. dunkle) Verunreinigungen, Aufschwemmungen bzw. Flecken auf der Schweißnaht auftreten. Weiterhin können derartige Verunreinigungen, Aufschwemmungen bzw. Flecken auch beim Plasmaschweißen von derartigen Werkstoffen auftreten. Bei diesen Aufschwemmungen handelt es sich vermutlich um kalziumreiche Ablagerungen aus dem Grundwerkstoff (Kalzium ist ein häufiger Eisenbegleiter und wird oftmals als ein Legierungselement verwendet). Bislang können diese Aufschwemmungen kaum beeinflusst bzw. verhindert werden und müssen, speziell bei hohen Anforderungen an die Nahtqualität, nachträglich umständlich und aufwendig von der Schweißnaht entfernt werden.

Es ist daher wünschenswert, eine Möglichkeit bereitzustellen, das Auftreten derartiger Verunreinigungen bzw. Aufschwemmungen bzw. Flecken auf der Schweißnaht beim Schweißen, insbesondere beim Wolfram-Inertgasschweißen oder beim Plasmaschweißen, von nicht rostenden Stählen bzw. Duplex-Stählen zu vermeiden.

### Offenbarung der Erfindung

Diese Aufgabe wird durch ein Verfahren zum Wolfram-Inertgasschweißen oder zum Plasmaschweißen, ein Gasgemisch als Schutzgas für das Wolfram-Inertgasschweißen oder als Außengas für das Plasmaschweißen und eine Verwendung dieses Gasgemischs mit den Merkmalen der unabhängigen Patentansprüche gelöst. Erfindungsgemäß werden insbesondere nichtrostende Stähle und/oder Duplex-Stähle mittels des Wolfram-Inertgasschweißens bzw. des Plasmaschweißens geschweißt. Das erfindungsgemäße Gasgemisch bzw. das erfindungsgemäße Schutzgasgemisch enthält dabei Argon, Stickstoff und CO₂.

Gemäß der Norm EN 10088-1:2005 ist ein nichtrostender Stahl durch einen Anteil von mehr als 10,5 Prozent Chrom definiert, der in einem austenitischen oder ferritischen Mischkristall gelöst ist. Ferrit bezeichnet dabei eine kubisch-raumzentrierte Gitterstruktur bzw. Phase. Austenit ist eine kubisch-flächenzentrierte Gitterstruktur bzw. Phase.

Duplex-Stähle zählen gemäß der Norm DIN-EN 10088 T1 bis T3 zu rost- und säurebeständigen Stählen. Duplex-Stähle sind zweiphasige Stähle mit einer FerritPhase welche Inseln aus Austenit-Phasen umschließt. Duplex-Stähle zeichnen sich durch ihre Kombination von Eigenschaften aus, die eine Mischung aus den Eigenschaften nichtrostender Chromstähle und rostfreier Chrom-Nickel-Stähle darstellen. Duplex-Stähle haben dabei eine höhere Festigkeiten als nichtrostender Chrom-Nickel-Stahl, weisen aber eine höhere Duktilität auf als nichtrostender Chromstahl auf.

Beim Plasmaschweißen werden wenigstes zwei unabhängige Gase bzw. Gasgemische benötigt. Zum einen ein Plasmagas bzw. Zentrumsgas, welches (zumindest teilweise) ionisiert wird. Als Plasmagas wird insbesondere Argon oder ein Gasgemisch aus Argon mit Anteilen an Wasserstoff oder
Helium verwendet. Das Außengas fungiert dabei, analog zum WIG-Schweißen, als ein Schutzgas.

### Vorteile der Erfindung

Im Rahmen der Erfindung wurden erhebliche Vorteile des Gasgemischs aus Argon, Stickstoff und CO₂ gegenüber herkömmlichen Schutzgasen bzw. Schutzgasgemischen bzw. Außengasen erkannt. Durch das erfindungsgemäße Gasgemisch kann das Auftreten der eingangs erwähnten Verunreinigungen, Aufschwemmungen bzw. Flecken auf der Schweißnaht beim Wolfram-Inertgasschweißen bzw. Plasmaschweißen von nicht rostenden Stählen und Duplex-Stählen vermieden werden oder zumindest reduziert werden. Durch das erfindungsgemäße Gasgemisch, insbesondere durch den Anteil von Argon und CO₂, kann die Richtung der Schmelzenströmung im Schmelzbad bzw. im Schweißgut beeinflusst werden. Diese Schmelzenströmung wird insbesondere derart beeinflusst, dass sich eine schmelzeneinwärts gerichtete Strömung einstellt, also eine Strömung, die vom Rand der Schweißnaht in deren Inneres gerichtet ist.

Diese Strömung ist dabei insbesondere ein Teil einer Marangoni-Konvektion. Durch das erfindungsgemäße Gasgemisch wird somit der sogenannte Marangoni-Effekt ausgenutzt. Eine Marangoni-Konvektion ist dabei eine Strömung, die durch Unterschiede einer Grenzflächenspannung (Oberflächenspannung) entsteht. Dabei kommt es zu temperaturbedingten Unterschieden in der Grenzflächenspannung zwischen verschiedenen Bereichen der Schmelze. Die Strömung innerhalb des Schweißguts ist dabei insbesondere entlang einer Grenzfläche von einem Ort mit vergleichsweise niedriger Grenzflächenspannung in Richtung einer lokal erhöhten Grenzflächenspannung gerichtet. Verunreinigungen in dem Schmelzgut strömen somit insbesondere vom Rand der Schweißnaht weg in ihr Inneres. Diese Verunreinigungen werden somit im Schweißgut gehalten und können sich nicht auf dem Schweißgut bzw. auf der Schweißnaht ablagern, wodurch es nicht oder zumindest kaum zu den Verunreinigungen, Aufschwemmungen bzw. Flecken auf der Schweißnaht kommt.

In einer vorteilhaften Ausgestaltung der Erfindung wird ein ferritarmes bzw. ein ferritkontrolliertes Schweißen von nichtrostenden Stählen und/oder Duplex-Stählen durchgeführt. Durch das erfindungsgemäße Gasgemisch wird insbesondere ein ferritarmes Schweißen ermöglicht. Bestimmte Arten von nichtrostenden Stählen bzw. Duplex-Stählen, insbesondere in der chemischen Industrie, müssen derart geschweißt werden, dass sich ein bestimmter Ferritgehalt in diesem Werkstoff bzw. in dem entsprechenden Schweißgut einstellt. Dadurch kann insbesondere eine Korrosion vermieden werden. Derartige nichtrostende Stähle bzw. Duplex-Stähle sind beispielsweise die Werkstoffe mit den Werkstoffnummern 1.4435, 1.4462 oder 1.4501. Insbesondere ist dies beim WIG-Schweißen, weiter insbesondere beim WIG-Orbital-Schweißen ohne Schweißzusatz der Fall, bei dem in aller Regel ohne Schweißzusatz gearbeitet wird und so eine Ferritkontrolle durch Nickelüberlegierung im Schweißzusatz nicht möglich ist..

Stickstoff ist ein Austenitbildner und besitzt eine stark austenitisierende Wirkung. Durch das erfindungsgemäße stickstoffhaltige Gasgemisch als Schutzgas bzw. Außengas wird diese austenitisierende Wirkung genutzt. Bildung von Ferrit bzw. einer Ferritphase in dem Schweißgut wird somit unterdrückt. Der Ferritgehalt des Werkstoffs bzw. des Schweißguts kann somit eingestellt und kontrolliert werden.. Eine derartige Kontrolle des Ferritgehaltes im Schweißgut kann beispielsweise aus Gründen der Sicherung der Korrosionsbeständigkeit (bei den nichtrostenden Stählen) oder der mechanischtechnologischen Eigenschaften (bei den Duplex-Stählen) zweckmäßig sein. Darüber hinaus werden durch das erfindungsgemäße Gasgemisch auch bei diesen Werkstoffen Verunreinigungen, Aufschwemmungen bzw. Flecken auf der Schweißnaht vermieden.

Ein derartiges ferritarmes Schweißen unter Verwendung des erfindungsgemäßen Gasgemischs bietet sich besonders bei metastabilen Austeniten, Vollausteniten sowie Duplex-Stählen an. Das erfindungsgemäße Gasgemisch besitzt damit einerseits den Vorteil, dass sich (insbesondere durch den Anteil an CO₂) eine von eventuellen Legierungsunterschieden unabhängige schmelzeneinwärts gerichtete Marangoni-Strömung einstellt und somit Verunreinigungen bzw. Aufschwemmungen bzw. Flecken auf der Schweißnaht vermieden werden können. Andererseits besitzt das erfindungsgemäße Gasgemisch den Vorteil, dass es eine ferritreduzierende Wirkung (insbesondere durch den Stickstoff) besitzt und somit auch Arten von nichtrostenden Stählen und Duplex-Stählen ferritarm geschweißt werden können.

In einer bevorzugten Ausgestaltung der Erfindung enthält das Gasgemisch zwischen 1% und 5% Stickstoff, insbesondere 3%. Alternativ oder zusätzlich enthält das Gasgemisch bevorzugt (im Wesentlichen) zwischen 0,3 und 0,7%, insbesondere 0,5% CO₂. Dieses Gasgemisch ist dabei insbesondere eine Grundgasmischung, die zweckmäßig variiert werden kann. Insbesondere eignet sich dieses Gasgemisch für das WIG-Schweißen, weiter insbesondere für das ferritarme WIG-Schweißen, von nichtrostenden Stählen und/oder Duplex-Stählen.

Vorzugsweise enthält das Gasgemisch zusätzlich Wasserstoff. Bevorzugt enthält das Gasgemisch dabei mehr als 0% und maximal 10%. Insbesondere enthält das Gasgemisch zwischen 1% und 5%, weiter insbesondere 5%, Wasserstoff. Durch den Anteil an Wasserstoff wird es insbesondere ermöglicht, eine Schweißgeschwindigkeit zu erhöhen. Somit kann die Effizienz bzw. der Wirkungsgrad des WIG-Schweißens erhöht werden. Weiterhin wird die WIG-Schweißelektrode durch den Anteil an Wasserstoff vor Oxidation durch den CO2-Anteil geschützt. Ein Verschleiß der WIG-Schweißelektrode wird dadurch verringert. Diese Ausgestaltung der Gasmischung mit Wasserstoffanteil bietet sich insbesondere für austenitische, nichtrostende Stähle an. Dabei kann der Ferritgehalt des Schweißguts präzise kontrolliert und eingestellt werden.

Ein weiteres Phänomen, welches in der schweißtechnischen Praxis beim herkömmlichen WIG-Schweißen bzw. beim herkömmlichen Plasmaschweißen häufig auftritt, ist ungenügendes bzw. unregelmäßiges Durchschweißen bei Fügepartnern aus verschiedenen Werkstoffchargen oder bei Schweißverbindungen aus verschiedenen Typen von nichtrostendem Stahl (beispielsweise Rohr-an-Flansch-Verbindungen etc.). Die unterschiedlichen Gehalte an Legierungsbestandteilen können dazu führen, dass sich unregelmäßige Schmelzbadströmungen einstellen, welche das konstante Durchschweißen erschweren. Insbesondere Schwefel hat großen Einfluss auf die Oberflächenspannung der Schmelze und somit auf ihr Fließverhalten. Durch die Ausgestaltung der Gasmischung mit Wasserstoffanteil können diese Auswirkungen unterschiedlich gerichteter Strömungen im Schmelzbad egalisiert bzw. kompensiert werden. Durch diesen Ausgleich bzw. diese Kompensation von Chargenunterschieden sowie durch das Vermeiden von Verunreinigungen bzw. Aufschwemmungen bzw. Flecken wird eine konstante Durchschweißung gewährleistet.

In einer weiteren bevorzugten Ausgestaltung enthält das Gasgemisch zusätzlich Helium bzw. es wird zusätzlich zu dem Gasgemisch Helium als Schutzgas verwendet. Vorzugsweise enthält das Gasgemisch mehr als 0% und maximal 50% Helium. Insbesondere enthält das Gasgemisch zwischen 10% und 50% Helium, weiter insbesondere 25%. Dieses Gasgemisch mit einem Anteil an Helium eignet sich besonders für das Schweißen von Duplex-Stahl. Durch den Anteil an Helium kann der Ferritgehalt des Schweißguts bzw. ein Verhältnis zwischen Ferrit und Austenit des Schweißguts präzise kontrolliert und eingestellt werden. Des Weiteren können durch den Anteil an Helium Chargenunterschiede egalisiert bzw. kompensiert werden. Somit kann auch unter Verwendung des Gasgemischs mit Heliumanteil durch den Ausgleich von Chargenunterschieden und dem Vermeiden von Aufschwemmungen eine konstante Durchschweißung gewährleistet werden.

Die Erfindung betrifft neben dem Verfahren zum Wolfram-Inertgasschweißen bzw. zum Plasmaschweißen und dem Gasgemisch als Schutzgasgemisch für das Wolfram-Inertgasschweißen bzw. als Außengas für das Plasmaschweißen weiterhin eine Verwendung eines erfindungsgemäßen Gasgemischs aus Argon, Stickstoff und CO₂ als Schutzgas beim Wolfram-Inertgasschweißen bzw. als Außengas beim Plasmaschweißen. Sämtliche vorstehend genannten Merkmale und Vorteile sollen in analoger Weise für das erfindungsgemäße Verfahren, das erfindungsgemäße Gasgemisch sowie die erfindungsgemäße Verwendung gelten.

## Patentansprüche

1. Verfahren zum Schweißen von nicht rostenden Stählen und/oder Duplex-Stählen durch Wolfram-Inertgasschweißen oder Plasmaschweißen, wobei ein Gasgemisch aus Argon, Stickstoff, Wasserstoff und CO₂ als Schutzgas beim Wolfram-Inertgasschweißen oder als Außengas beim Plasmaschweißen verwendet wird, **dadurch gekennzeichnet, dass** das Gasgemisch zwischen 1% und 5%, insbesondere 3%, Stickstoff und im Wesentlichen zwischen 0,3% und 0,7% CO2 enthält.

2. Verfahren nach Anspruch 1, wobei ein ferritarmes Schweißen von nicht rostenden Stählen und/oder Duplex-Stählen durchgeführt wird.

3. Verfahren nach einem der vorstehenden Ansprüche, wobei das Gasgemisch mehr als 0% und maximal 10%, insbesondere zwischen 1% und 5%, weiter insbesondere 5%, Wasserstoff enthält.

4. Verfahren nach einem der vorstehenden Ansprüche, wobei zusätzlich zu dem Gasgemisch Helium als Schutzgas verwendet wird.

5. Verfahren nach Anspruch 4, wobei das Gasgemisch mehr als 0% und maximal 50%, insbesondere zwischen 10% und 50%, weiter insbesondere 25%, Helium enthält.

6. Gasgemisch als Schutzgas für Schweißen von nicht rostenden Stählen und/oder Duplex-Stählend durch das Wolfram-Inertgasschweißen oder als Außengas für das Plasmaschweißen , wobei das Gasgemisch eine Mischung aus Argon, Stickstoff, Wasserstoff und CO₂ ist, **dadurch gekennzeichnet, dass** das Gasgemisch zwischen 1% und 5%, insbesondere 3%, Stickstoff und im Wesentlichen zwischen 0,3% und 0,7% CO2 enthält.

7. Gasgemisch nach Anspruch 6, wobei das Gasgemisch mehr als 0% und maximal 10%, insbesondere zwischen 1% und 5%, weiter insbesondere 5%, Wasserstoff enthält.

8. Gasgemisch nach Anspruche 6 oder 7, wobei das Gasgemisch zusätzlich Helium enthält.

9. Gasgemisch nach Anspruch 8, wobei das Gasgemisch mehr als 0% und maximal 50%, insbesondere zwischen 10% und 50%, weiter insbesondere 25%, Helium enthält.

## Claims

1. Method for welding of stainless steels and/or duplex steels by tungsten inert gas welding or plasma arc welding, using a gas mixture of argon, nitrogen, hydrogen and CO₂ as inert gas in tungsten inert gas welding or as shielding gas in plasma arc welding, **characterized in that** the gas mixture comprises between 1% and 5%, more particularly 3%, of nitrogen and substantially between 0.3% and 0.7% of CO2.

2. Method according to Claim 1, wherein low-ferrite welding of stainless steels and/or duplex steels is carried out.

3. Method according to either of the preceding claims, wherein the gas mixture comprises more than 0% and not more than 10%, more particularly between 1% and 5%, further particularly 5%, of hydrogen.

4. Method according to any of the preceding claims, wherein helium is used as inert gas additionally to the gas mixture.

5. Method according to Claim 4, wherein the gas mixture comprises more than 0% and not more than 50%, more particularly between 10% and 50%, further particularly 25%, of helium.

6. Gas mixture as inert gas for welding of stainless steels and/or duplex steels by tungsten inert gas welding or as shielding gas for plasma arc welding, wherein the gas mixture is a mixture of argon, nitrogen, hydrogen and CO₂, **characterized in that** the gas mixture comprises between 1% and 5%, more particularly 3%, of nitrogen and substantially between 0.3% and 0.7% of CO2.

7. Gas mixture according to Claim 6, wherein the gas mixture comprises more than 0% and not more than 10%, more particularly between 1% and 5%, further particularly 5%, of hydrogen.

8. Gas mixture according to Claim 6 or 7, wherein the gas mixture additionally comprises helium.

9. Gas mixture according to Claim 8, wherein the gas mixture comprises more than 0% and not more than 50%, more particularly between 10% and 50%, further particularly 25%, of helium.

## Revendications

1. Procédé pour le soudage d'aciers inoxydables et/ou d'aciers duplex par soudage au tungstène sous gaz inerte ou par soudage au plasma, un mélange gazeux constitué d'argon, d'azote, d'hydrogène et de CO₂ étant utilisé comme gaz de protection lors du soudage au tungstène sous gaz inerte ou comme gaz extérieur lors du soudage au plasma, **caractérisé en ce que** le mélange gazeux contient entre 1% et 5%, en particulier 3%, d'azote et essentiellement entre 0,3% et 0,7% de CO₂.

2. Procédé selon la revendication 1, un soudage pauvre en ferrite d'aciers inoxydables et/ou d'aciers duplex étant réalisé.

3. Procédé selon l'une quelconque des revendications précédentes, le mélange gazeux contenant plus de 0% et au maximum 10%, en particulier entre 1% et 5%, plus particulièrement 5%, d'hydrogène.

4. Procédé selon l'une quelconque des revendications précédentes, de l'hélium étant utilisé en plus du mélange gazeux comme gaz de protection.

5. Procédé selon la revendication 4, le mélange gazeux contenant plus de 0% et au maximum 50%, en particulier entre 10% et 50%, plus particulièrement 25%, d'hélium.

6. Mélange gazeux comme gaz de protection pour le soudage d'aciers inoxydables et/ou d'aciers duplex par soudage au tungstène sous gaz inerte ou comme gaz extérieur pour le soudage au plasma, le mélange gazeux étant un mélange d'argon, d'azote, d'hydrogène et de CO₂, **caractérisé en ce que** le mélange gazeux contient entre 1% et 5%, en particulier 3%, d'azote et essentiellement entre 0,3% et 0,7% de CO₂.

7. Mélange gazeux selon la revendication 6, le mélange gazeux contenant plus de 0% et au maximum 10%, en particulier entre 1% et 5%, plus particulièrement 5%, d'hydrogène.

8. Mélange gazeux selon les revendications 6 ou 7, le mélange gazeux contenant en outre de l'hélium.

9. Mélange gazeux selon la revendication 8, le mélange gazeux contenant plus de 0% et au maximum 50%, en particulier entre 10% et 50%, plus particulièrement 25%, d'hélium.
